# EUROPÄISCHE PATENTSCHRIFT

(11) **EP 1 007 383 B1**
(45) Veröffentlichungstag und Bekanntmachung des Hinweises auf die Patenterteilung: **08.05.2002**
(21) Anmeldenummer: 98946301.3
(22) Anmeldetag: 07.08.1998
(51) Int. Cl.: B60K 6/04

(54) **VERFAHREN ZUM BETRIEB EINES PARALLELEN HYBRIDANTRIEBS**
OPERATIONAL METHOD FOR A PARALLEL HYBRID DRIVE UNIT
MODE DE FONCTIONNEMENT D'UN GROUPE MOTEUR HYBRIDE PARALLELE

(30) Priorität: 29.08.1997 DE 19737791
(43) Veröffentlichungstag der Anmeldung: 14.06.2000
(73) Patentinhaber: DaimlerChrysler AG, 70567 Stuttgart (DE)
(72) Erfinder: BADER, Christian, D-71032 Böblingen (DE)
(86) Internationale Anmeldenummer: EP9805021
(87) Internationale Veröffentlichungsnummer: WO9911481

(56) Entgegenhaltungen:
- WO-A1-95/32100
- DE-A- 4 202 083
- DE-A1- 4 113 386
- US-A- 5 653 302

## Beschreibung

Die Erfindung bezieht sich auf ein Verfahren zum Betrieb eines parallelen Kraftfahrzeug-Hybridantriebs mit einem Verbrennungsmotor, der über eine Kupplung und ein Schaltgetriebe mit einer Antriebswelle verbunden ist, und mit einer Drehstrommaschine, die mit ihrem Läufer direkt an eine Vorgelegewelle des Schaltgetriebes angekoppelt und über einen Drehstromumrichter mit einem elektrischen Energiespeicher verbunden ist.

Ein derartiger Hybridantrieb für ein Kraftfahrzeug ist aus der DE 42 02 083 A1 bekannt. Neben den drei üblichen Betriebsweisen des Hybridantriebs, in denen je eines der beiden Antriebsaggregate allein oder beide gemeinsam eingesetzt sind, wird vorgeschlagen, die Drehstrommaschine als Synchronisationshilfe für das Schaltgetriebe bei Gangwechseln zu nutzen, wobei eine Ansteuerlogik zur Ansteuerung der Drehstrommaschine vorhanden ist.

Ferner ist aus der DE-A-23 53 724 ein Parallelhybridantrieb mit einer Wärmekraftmaschine bekannt, die in fester Drehzahlbeziehung mit einem Gyrospeicher betrieben wird und gemeinsam mit einer Elektromaschine an ein Leistungsverzweigungsgetriebe gekoppelt werden kann. Die Elektromaschine ist in ihrem Leistungsvermögen wesentlich geringer dimensioniert als der Gyrospeicher und die Wärmekraftmaschine. Die Wärmekraftmaschine soll in günstigen Kennfeldbereichen gefahren und träge, d.h. langsam, geregelt werden. Kurzfristige Änderungen der Leistungsanforderung an den Hybridantrieb sollen vom Gyrospeicher sowie der Elektromaschine gedeckt werden.

Aus der DE 44 22 636 A1 ist ein Verfahren zur automatischen Steuerung eines Parallelhybridantriebs bekannt, bei dem die Leistung einer Brennkraftmaschine auf drei unterschiedliche Arten in Abhängigkeit von aktuellen Fahrparametern, insbesondere der Leistungsanforderung, der Fahrzeuggeschwindigkeit und dem Batterieladezustand, bereitgestellt wird. Als Bewertungskriterien dienen verschiedene, vorzugebende Schwellwerte, insbesondere Leistungsgrenzen der Antriebe und der Batterie sowie Geschwindigkeitsgrenzwerte, in deren Abhängigkeit die Brennkraftmaschine betrieben wird. Dabei soll grundsätzlich die Bereitstellung von Leistung durch die Brennkraftmaschine aus Gründen der Abgasemissionen minimiert werden, ohne die Elastizität des Gesamtaggregats fahrkomfortmindernd einzuschränken.

In der Veröffentlichung B. Giera, et al. "Hybridantrieb mit Gyro-Komponente für wirtschaftliche und dynamische Betriebsweise", ETZ-A Bd. 94 (1973), S. 653 ist ein Hybridantrieb mit einem Verbrennungsmotor, einer Gyro-Komponente und einem Elektromotor beschrieben. Der Elektromotor ist mit einem ersten Eingang eines leistungsüberlagernden Differentialgetriebes verbunden, während an einem zweiten Eingang desselben der Verbrennungsmotor und die mit diesem mittels einer Übersetzung parallel geschaltete Gyro-Komponente gekoppelt sind. Der Ausgang dieses Differentialgetriebes ist über ein Schaltgetriebe mit einem herkömmlichen Differentialgetriebe der Antriebsachse verbunden. Aus Emissionsgründen wird die Leistungsabgabe des Verbrennungsmotors nur sehr langsam, d.h. phlegmatisiert, geregelt. Die maximale spezifische Leistung der Gyro-Komponente ist um ein Mehrfaches höher als die des Verbrennungsmotors gewählt, die ihrerseits typischerweise etwa doppelt so hoch wie diejenige des Elektromotors gewählt ist.

Aus der Offenlegungsschrift DE 44 22 647 A1 ist ein Verfahren zur automatischen Steuerung der Bereitstellung von Leistung durch eine Brennkraftmaschine und/oder durch einen über einen elektrischen Energiespeicher antreibbaren Elektromotor in Kraftfahrzeugen mit Hybridantrieb bekannt, bei dem die angeforderte Antriebsleistung, solange sie nicht größer als eine vorgegebene Grundleistung ist, allein durch die Brennkraftmaschine bereitgestellt wird, während in Betriebsphasen, in welchen die angeforderte Antriebsleistung größer als die vorgegebene Grundleistung ist, bei ausreichender Ladung des elektrischen Energiespeichers ein Teil der Antriebsleistung additiv durch den Elektromotor bereitgestellt wird. Als Grundleistung wird dabei vorzugsweise die durch die Brennkraftmaschine in Abhängigkeit von der jeweils aktuellen Drehzahl maximal erzeugbare Leistung vorgegeben. Wenn die angeforderte Antriebsleistung kleiner als die vorgegebene Grundleistung ist und der elektrische Energiespeicher nicht ausreichend geladen ist, wird Überschußleistung durch die Brennkraftmaschine zum Aufladen des elektrischen Energiespeichers bereitgestellt.

In dem Zeitschriftenaufsatz P. Chudi und A. Malmquist, Schadstoffarmes Hybridtriebwerk für moderne Lastkraftwagen und Omnibusse, ABB Technik 6/7, 1996, Seite 12 sind ein serieller Kraftfahrzeug-Hybridantrieb mit speziellem Aufbau sowie eine dafür geeignete Betriebsweise offenbart. Als Brennkraftmaschine ist eine Gasturbine vorgesehen. Zur Steuerung des Hybridantriebs erfaßt ein Fahrzeugmanagementrechner den jeweiligen momentanen Leistungsbedarf und durch zeitliche Integration den mittleren Leistungsbedarf des elektrischen Antriebsmotors. Der Sollwert für die Gasturbinenleistung wird dann gleich der Summe aus diesem mittleren Leistungsbedarf des Antriebselektromotors und einer Leistungskomponente zur Wiederaufladung von als elektrische Energiespeicher fungierenden Batterien gesetzt. An die Gasturbine ist mechanisch ein Hochgeschwindigkeitsgenerator angekoppelt. Der Antriebselektromotor ist dann elektrisch einerseits mit dem Hochgeschwindigkeitsgenerator und andererseits mit den von diesem aufladbaren Batterien verbunden, so daß er parallel vom Hochgeschwindigkeitsgenerator mit der angekoppelten Gasturbine und den Batterien gespeist wird.

Aufgabe der Erfindung ist es, ein Verfahren zum Betrieb eines parallelen Hybridantriebs der eingangs genannten Art bereitzustellen, das einen möglichst emissionsarmen Betrieb des Verbrennungsmotors mit möglichst einfachen Mitteln gewährleistet.

Diese Aufgabe wird erfindungsgemäß durch ein Verfahren mit den Merkmalen des Anspruchs 1 gelöst. Dabei wird von einer Steuerung ein zeitlicher Mittelwert des während eines jeweiligen vorgebbaren Fahrzeitintervalls benötigten Antriebsmoments ermittelt und dem Verbrennungsmotor als Last abgefordert. Die Differenz zwischen dem somit vom Verbrennungsmotor abgegebenen und dem aktuell benötigten Antriebsmoment wird von der Drehstrommaschine zur Verfügung gestellt oder aufgenommen. Die Drehstrommaschine ist über einen Drehstromumrichter mit einem elektrischen Energiespeicher verbunden, aus dem kurzfristig benötigte Antriebsenergie entnommen und in dem Bremsenergie zwischengespeichert werden kann. Auf diese Weise werden bei kontinuierlicher, gleitender Mittelung des benötigten Antriebsmoments Lastsprünge verzögerungsfrei, aber nivelliert an den Verbrennungsmotor weitergegeben, wobei der Drehstrommotor ggf. die sich ergebenden kurzzeitigen Leistungsbedarfsspitzen zur Verfügung stellt. Dadurch wird erreicht, daß der Verbrennungsmotor phlegmatisiert betrieben wird, wobei das Ausmaß der Phlegmatisierung durch geeignete Wahl der Länge des zur Mittelwertbildung herangezogenen Fahrzeitintervalls eingestellt werden kann.

Ein nach Anspruch 2 weitergebildetes Verfahren bestimmt das Fahrzeitintervall für die Mittelwertbestimmung in Abhängigkeit vom Emissionsverhalten des Verbrennungsmotors bei Lastwechseln und/oder von dessen aktuellem Betriebszustand, wobei das Fahrzeitintervall mindestens so groß gewählt wird, daß bei einem gegebenen, maximalen Lastsprung die Laständerung des Verbrennungsmotors und damit die Schadstoffemissionen einen bestimmten Toleranzwert nicht überschreiten. Eine derartige Festlegung des Fahrzeitintervalls kann für mehrere Betriebszustände des Verbrennungsmotors getrennt vorgenommen werden, da die tatsächliche, absolute Belastung des Verbrennungsmotors dabei von Bedeutung ist. Da im Stadtverkehr die Zeitspanne typischer Beschleunigungsvorgänge eines Fahrzeugs, insbesondere eines Nutzfahr-zeuges, im allgemeinen in einer Größenordnung von 15s liegt, wird das Fahrzeitintervall für die Mittelwertbestimmung vorzugsweise in dieser Größenordnung gewählt.

Bei einem nach Anspruch 3 weitergebildeten Verfahren wird der elektrische Energiespeicher während einer Konstantfahrt, bei welcher der Verbrennungsmotor unterhalb der Vollast betrieben wird, dadurch aufgeladen, daß der Verbrennungsmotor eine höhere als zum Fahrbetrieb erforderliche Leistung abgibt. Dadurch können Energieumwandlungsverluste kraftstoffsparend ausgeglichen werden.

Ein bevorzugtes Ausführungsbeispiel der Erfindung ist in den Zeichnungen dargestellt und wird nachfolgend beschrieben. Hierzu zeigen:
- Fig. 1: schematisch einen erfindungsgemäß betreibbaren parallelen Hybridantrieb,
- Fig. 2: ein Zeitverlaufsdiagramm der Geschwindigkeit und der Antriebsleistung eines mit dem Antrieb von Fig. 1 ausgerüsteten Kraftfahrzeuges während eines beispielhaften Fahrzyklus von 50s zwischen zwei Fahrzeugstillstandsphasen,
- Fig. 3: ein Zeitverlaufsdiagramm des Antriebsmomentes und der Eingangsdrehzahl am Eingang eines Getriebes des Antriebs von Fig. 1 während des beispielhaften Fahrzeitintervalls nach Fig. 2 und
- Fig. 4: ein Zeitverlaufsdiagramm der idealisierten Abtriebsmomente der beiden Antriebsaggregate des Antriebs von Fig. 1, wobei das zur Mittelwertbestimmung herangezogene Fahrzeitintervall der Länge des gesamten Fahrzyklus von 50s entspricht.

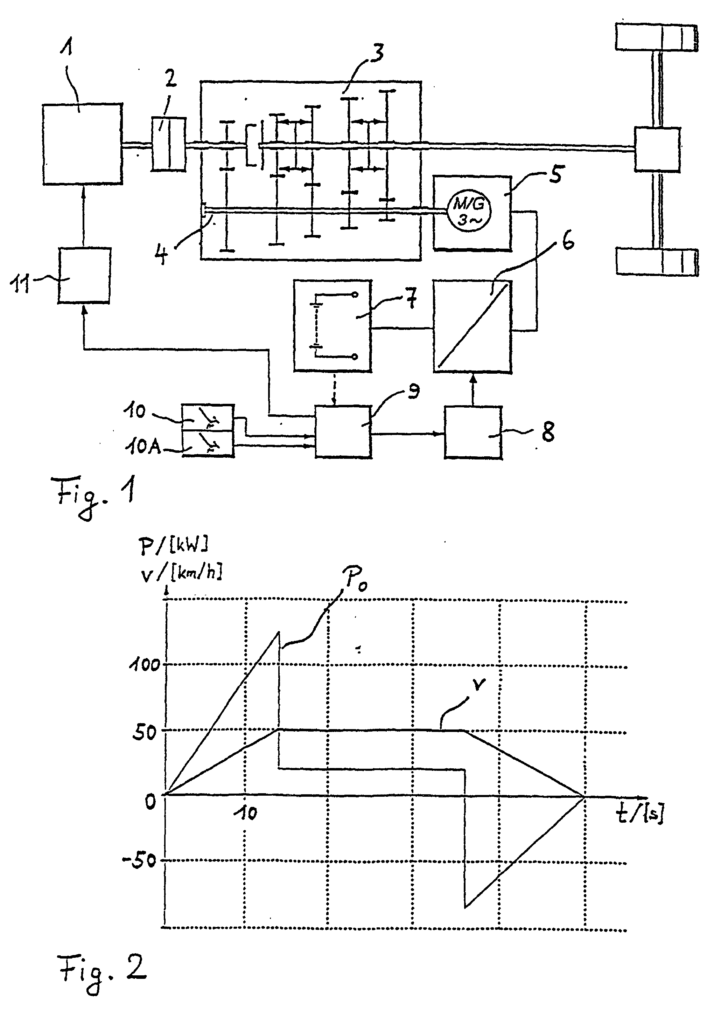

Fig. 1 zeigt einen parallelen Hybridantrieb eines Kraftfahrzeuges, der nach dem erfindungsgemäßen Verfahren betreibbar ist und einen Verbrennungsmotor 1, beispielsweise einen Hubkolben-Dieselmotor, aufweist, der in üblicher Weise über eine Kupplung 2 mit der Eingangswelle eines Schaltgetriebes 3 verbunden ist. Das Schaltgetriebe 3 weist eine Vorgelegewelle 4 auf, die einerseits die für die einzelnen Gangstufen vorgesehenen Räderpaare antreibt und andererseits mit einer Drehstrommaschine 5 verbunden ist. Die Drehstrommaschine 5 steht über einen Drehstromumrichter 6 mit einer Traktionsbatterie 7 in Verbindung. Eine Momentenauswahlstufe 9 erhält eine Sollwertvorgabe von einem Fahrpedal 10 und einem Bremspedal 10A, die vom Fahrzeugführer betätigt werden können, und steuert daraufhin einerseits eine Ansteuerungslogik 8 und andererseits eine Einspritzpumpe 11 an. Die Ansteuerungslogik 8 bestimmt mit Hilfe des Drehstromumrichters 6 die Energieentnahme aus der Traktionsbatterie und damit auch die Leistungsabgabe der Drehstrommaschine 5. Die Einspritzpumpe 11 bestimmt in herkömmlicher Weise die Kraftstoffzufuhr des Verbrennungsmotors 1 und insofern dessen Leistungsabgabe. Ansteuerlogik 8 und Momentenauswahlstufe 9 bilden somit eine Steuereinheit des Hybridantriebs.

In den Fig. 2 bis 4 ist idealisiert ein beispielhafter Fahrzyklus für das mit dem Hybridantrieb ausgerüstete Fahrzeug illustriert, während dem der Antrieb durch seine Steuereinheit erfindungsgemäß betrieben wird. In Fig. 2 sind die Geschwindigkeit v und der Leistungsbedarf P₀ an den Rädern des Kraftfahrzeuges mit einer Masse von 7,5t dargestellt. Der Fahrzyklus umfaßt eine Zeitspanne von 50s, während der das Fahrzeug eine Wegstrecke von rund 500m zurücklegt und eine Spitzengeschwindigkeit von 50 km/h erreicht. Dabei handelt es sich um einen typischen Stadtfahrzyklus, bei dem das Fahrzeug aus dem Stillstand losfährt, mäßig bei zweimaligem Gangwechsel, wie aus Fig. 3 ersichtlich, beschleunigt, eine gewisse Wegstrecke bei der zulässigen Höchstgeschwindigkeit von 50 km/h zurücklegt und schließlich sanft bis zum Stillstand abbremst.

In dem Diagramm von Fig. 3 sind für den beispielhaften Fahrzyklus das Moment M₀ am Getriebeeingang und die entsprechende Drehzahl n₀ am Getriebeeingang dargestellt. Da der Übersichtlichkeit halber alle Verluste in der Leistungsübertragung vernachläßigt wurden, läßt sich aus dem Moment M₀ und der Drehzahl n₀ unmittelbar die Antriebsleistung P₀ errechnen.
Die Sprünge im Verlauf der Drehzahl n₀ kennzeichnen dabei ferner jeweils einen Gangwechsel.

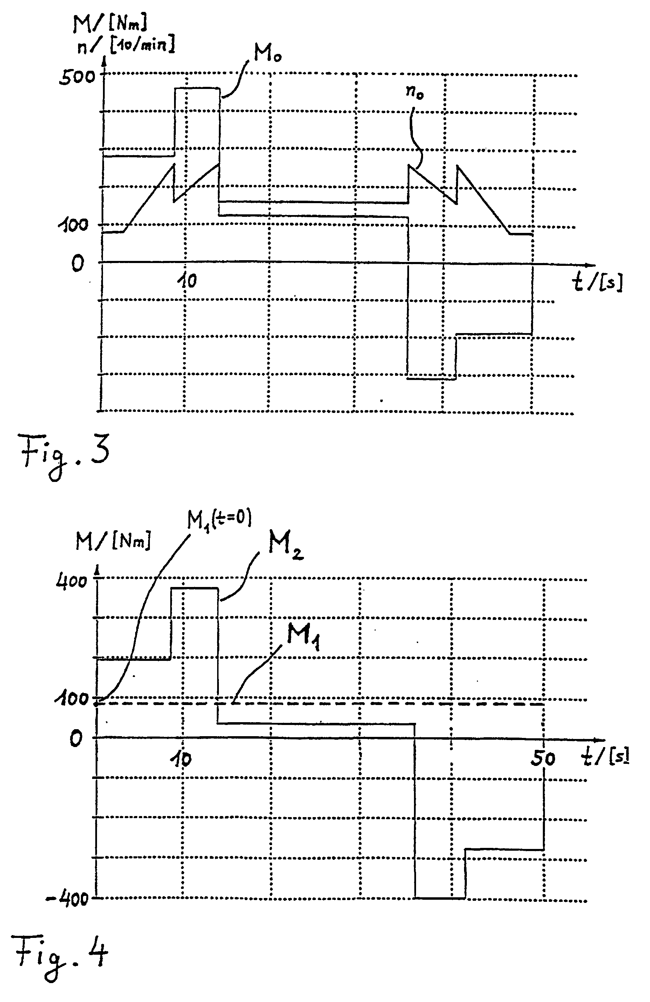

Gemäß dem erfindungsgemäßen Verfahren, das nachfolgend anhand des geschilderten, beispielhaften Fahrzyklus näher erläutert wird, wird nach dem durch die Betätigung des Fahrpedals 10 ausgelösten Anfahrbefehl in der Momentenauswahlstufe 9 ein bestimmtes Antriebsmoment M₁ (t=0) ermittelt, das über die Einspritzpumpe 11 am Verbrennungsmotor 1 als Startmoment eingestellt wird. Im vorliegenden Beispiel beträgt dieses rund 90 Nm, wie Fig. 4 zu entnehmen. Im folgenden oder ab Erreichen einer bestimmten, vorgebbaren Mindestgeschwindigkeit ermittelt die Momentenauswahlstufe 9 selbständig das benötigte Antriebsmoment M₁ für den Verbrennungsmotor 1. In dem erläuterten und in den Figuren 2 bis 4 dargestellten Fahrzyklus wird dafür zunächst die für Antriebsmoment-Mittelungen herangezogene Länge eines anschließenden Fahrzeitintervalls auf 50s festgelegt. Die Länge dieses Fahrzeitintervalls ist prinzipiell beliebig in Abhängigkeit vom Betriebskennfeld des Verbrennungsmotors 1, von der Leistungsabgabe des Hybridantriebs oder vom Fahrerwunsch wählbar. Dann wird ein für dieses Fahrzeitintervall voraussichtlich benötigter Momentenverlauf geschätzt und rechnerisch zeitlich gemittelt, wonach der errechnete Mittelwert des für das Fahrzeitintervall benötigten Antriebsmoments über eine entsprechende Einstellung der Einspritzpumpe 11 dem Verbrennungsmotor 1 als Leistungsanforderung zugeordnet wird. In dem erläuterten Fahrzyklus ist das Startmoment M₁(t=0) gleich groß wie das für den gesamten Fahrzyklus benötigte mittlere Antriebsmoment M₁, wie aus Fig. 4 ersichtlich ist.

Das während der anfänglichen Beschleunigungsphase des erläuterten Fahrzyklus benötigte Beschleunigungsmoment wird von der Momentenauswahlstufe 9 ausschließlich der Drehstrommaschine 5 als von ihr bereitzustellendes Moment M₂ zugeordnet. Dadurch wird es im vorliegenden idealisierten Fall ermöglicht, bei im voraus bekanntem Antriebsmomentenverlauf M₀ während eines Fahrzeitintervalls ein konstant gehaltendes mittleres Antriebsmoment M₁ zu errechnen, dieses dem Verbrennungsmotor 1 des Hybridantriebs zuzuordnen und den Verbrennungsmotor 1 damit während des gesamten Fahrzeitintervalls bei konstanter Last zu betreiben. Dabei erfolgt eine neuerliche, aktualisierte Mittelungsprozedur entweder kontinuierlich oder spätestens gegen Ende des aktuellen Fahrzeitintervalls.

In einem nicht dargestellten Fall, in dem das benötigte Antriebsmoment nur eingeschränkt vorhersagbar ist, ist eine kontinuierlich durchgeführte Mittelung über den Momentenverlauf eines vorangegangenen Fahrzeitintervalls zweckmäßig. Dabei wird dann eine über das Fahrpedal 10 zur Momentenauswahlstufe 9 geleitete Momentenänderungsanforderung zunächst vollständig über die Ansteuerlogik 8 an die Drehstrommaschine 5 weitergegeben und erst sukzessive durch den sich zeitlich geglättet allmählich ändernden Antriebsmoment-Mittelwert über die Einspritzpumpe 11 auf den Verbrennungsmotor 1 verlagert. Damit ist sichergestellt, daß im stationären Fahrbetrieb, d.h. bei konstant gehaltener Stellung des Fahrpedals 10, spätestens nach Verstreichen der Mittelungszeitspanne der gesamte Momentenwunsch vom Verbrennungsmotor gedeckt wird.

In einer derartigen Konstantfahrphase kann die Momentenauswahlstufe 9 bei Bedarf das Motormoment M₁ über das tatsächlich benötigte Antriebsmoment M₀ hinaus anheben, wenn der Ladezustand der Traktionsbatterie 7 einen bestimmten Schwellwert unterschreitet. Die Drehstrommaschine 5 speist dann im generatorischen Betrieb einen bestimmten Bruchteil der aus der Traktionsbatterie 7 entnommenen Energie in einer Größenordnung von etwa 30% in die Traktionsbatterie zurück. Dieser Anteil kann dazu dienen, Verluste auszugleichen, während die eigentliche Ladeenergie für die Traktionsbatterie 7 aus der kinetischen Energie des Fahrzeugs beim Betätigen des Bremspedals 10A zurückgespeist wird. Als theoretische Mindestgröße für die Bemessung des Energiegehalts der Traktionsbatterie 7 ergibt sich demnach die kinetische Energie des Fahrzeugs bei Maximalgeschwindigkeit, jedoch ist unter Berücksichtigung aller Verluste von etwa dem doppelten Betrag dieses theoretischen Wertes auszugehen. Bei Verwendung einer vorzugsweise vorzusehenden alkalischen Batterie als Traktionsbatterie 7 ergibt sich ein Batteriegewicht, das weniger als 10% der Fahrzeuggesamtmasse beträgt.

In einem nicht dargestellten modifizierten Ausführungsbeispiel des erfindungsgemäßen Verfahrens wird der Momentenauswahlstufe 9 ein Startmoment M₁(t=0) für den Verbrennungsmotor 1 mit dem Wert null zugewiesen. Dadurch wird sichergestellt, daß der Anfahrvorgang bis zum Erreichen einer vorgebbaren Mindestgeschwindigkeit ausschließlich mit Hilfe der Drehstrommaschine 5 durchgeführt und der Verbrennungsmotor 1 erst später zugeschaltet wird. Diese Verfahrensausgestaltung erweist sich als besonders vorteilhaft bei einem Kaltstart des Fahrzeugs mit niedriger Drehzahl und hoher Last, bei dem der Verbrennungsmotor 1 dann nicht mit hoher Schadstoffemission betrieben wird.

Erfindungsgemäß reagiert der Verbrennungsmotor durch die Mittelung des von ihm abgeforderten Antriebsmoments in Abhängigkeit von der gewählten Mittelungsprozedur phlegmatisiert auf einen durch den Fahrer vorgegebenen Momentenwunsch, wobei anfänglich im allgemeinen nur ein Bruchteil einer anstehenden Laständerung durch den Verbrennungsmotor gedeckt wird. Die Differenz zwischen dem aktuell benötigten und dem vom Verbrennungsmotor gelieferten Antriebsmoment gibt die Drehstrommaschine des Hybridantriebs ab. Die Drehstrommaschine 5 und die Traktionsbatterie 7 können bei Bedarf relativ klein dimensioniert werden, da die Drehstrommaschine nur kurzzeitige Antriebsmomentschwankungen zu decken braucht.

## Patentansprüche

1. Verfahren zum Betrieb eines parallelen Kraftfahrzeug-Hybridantriebs mit einem Verbrennungsmotor (1), der über eine Kupplung (2) und ein Schaltgetriebe (3) mit einer Antriebswelle verbunden ist, und mit einer Drehstrommaschine (5), die mit ihrem Läufer direkt an eine Vorgelegewelle (4) des Schaltgetriebes angekoppelt und über einen Drehstromumrichter (6) mit einem elektrischen Energiespeicher (7) verbunden ist,
**dadurch gekennzeichnet, daß**
von einer Hybridantriebssteuereinheit (8, 9) ein zeitlicher Mittelwert des während eines jeweiligen vorgebbaren Fahrzeitintervalls benötigten Antriebsmoments ermittelt wird und der Verbrennungsmotor (1) sowie die Drehstrommaschine (5) in ihrer Leistungsabgabe so gesteuert werden, daß der Verbrennungsmotor das dem ermittelten zeitlichen Mittelwert entsprechende Antriebsmoment und die Drehstrommaschine die Differenz zwischen dem aktuell benötigten und dem vom Verbrennungsmotor gelieferten Antriebsmoment abgibt.

2. Verfahren nach Anspruch 1,
**dadurch gekennzeichnet, daß**
das Fahrzeitintervall für die Mittelwertbestimmung in Abhängigkeit vom Emissionsverhalten des Verbrennungsmotors bei Lastwechseln und/oder vom aktuellen Betriebszustand des Verbrennungsmotors eingestellt wird.

3. Verfahren nach Anspruch 1,
**dadurch gekennzeichnet, daß**
die Hybridantriebssteuereinheit (8, 9) während eines Fahrzeitintervalls mit einem benötigten Antriebsmoment konstanter Größe, jedoch unterhalb der Vollast des Verbrennungsmotors (1), und bei wenigstens teilentladenem Energiespeicher (7) das abgegebene Moment des Verbrennungsmotors über den Wert des benötigten Antriebsmoments hinaus erhöht.

## Claims

1. A process for the operation of a parallel motor vehicle hybrid propulsion system with an internal combustion engine (1) which is connected to a drive shaft by means of a clutch (2) and a manual transmission (3), and with a three-phase motor (5) the rotor of which is coupled directly to a countershaft (4) in the manual transmission and connected to an electrical energy accumulator (7) by means of a three-phase converter (6),
**characterised in that**
a mean time value for the drive torque required during a predeterminable driving period is determined by a hybrid propulsion system control unit (8, 9), and the power outputs of the internal combustion engine (1) and the three-phase motor (3) are controlled in such a manner that the internal combustion engine produces the drive torque corresponding to the mean time value determined and the three-phase motor produces the difference between the drive torque required at a given point and the drive torque supplied by the internal combustion engine.

2. A process in accordance with Claim 1,
**characterised in that**
the driving period for the determination of the mean value is set in dependence on the emission characteristics of the internal combustion engine during load alteration and/or on the operating state of the internal combustion engine at a given point.

3. A process in accordance with Claim 1,
**characterised in that**
during a driving period which requires a drive torque of constant value which is, however, below full load of the internal combustion engine (1) and when the energy accumulator (7) is at least partially discharged, the hybrid propulsion system control unit (8, 9) increases the torque produced by the internal combustion engine above the value of the drive torque required.

## Revendications

1. Procédé de fonctionnement d'un groupe moteur hybride parallèle d'un véhicule automobile, comportant un moteur à combustion interne (1) qui est relié à un arbre d'entraînement via un embrayage (2) et via une boîte de vitesses (3), et comportant un groupe triphasé (5) qui est accouplé par son rotor directement à un arbre intermédiaire (4) de la boîte de vitesses et qui est connecté à un accumulateur d'énergie électrique (7) via un convertisseur triphasé (6), **caractérisé en ce qu'**une unité de commande (8, 9) du groupe moteur hybride détermine une valeur temporelle moyenne du couple d'entraînement respectif requis pendant une période temporelle de conduite respective prédéterminée, et **en ce que** le moteur à combustion interne (1) ainsi que le groupe triphasé (5) sont commandés à l'égard de leur puissance dégagée de telle sorte que le moteur à combustion interne fournit le couple d'entraînement correspondant à la valeur temporelle moyenne déterminée et que le groupe triphasé fournit la différence entre le couple d'entraînement actuellement requis et le couple d'entraînement fourni par le moteur à combustion interne.

2. Procédé selon la revendication 1, **caractérisé en ce que** la période temporelle de conduite pour la détermination de la valeur moyenne est réglée en fonction du comportement d'émission du moteur à combustion interne lors d'un changement de charge et/ou en fonction de l'état de fonctionnement actuel du moteur à combustion interne.

3. Procédé selon la revendication 1, **caractérisé en ce que** pendant une période temporelle de conduite et lorsque l'accumulateur d'énergie (7) est au moins partiellement déchargé, l'unité de commande (8, 9) du groupe moteur hybride augmente le couple, fourni par le moteur à combustion interne, au-delà de la valeur du couple d'entraînement requis, d'un couple d'entraînement requis de taille constante, mais inférieur à la pleine charge du moteur à combustion interne (1).
